# EUROPÄISCHE PATENTANMELDUNG

(11) **EP 2 711 733 A2**
(43) Veröffentlichungstag der Anmeldung: **26.03.2014**
(21) Anmeldenummer: 13005889.4
(22) Anmeldetag: 02.02.2012
(51) Int. Cl.: G01S 17/66, G01S 3/786, G01S 5/16, G01S 7/495, G01S 17/89, G01S 17/87

(54) **Luftraumüberwachungssystem zur Erfassung von innerhalb eines zu überwachenden Gebiets startenden Raketen sowie Verfahren zur Luftraumüberwachung**

(30) Priorität: 04.02.2011 DE 102011010339
(62) Teilanmeldung aus: 12712895.7
(71) Anmelder: EADS Deutschland GmbH, 85521 Ottobrunn (DE)
(72) Erfinder: Pongratz, Hans Wolfgang, 82024 Taufkirchen (DE); Hiebl, Manfred, 86633 Neuburg a. d. Donau (DE)

(57) **Zusammenfassung**

Ein Luftraumüberwachungssystem zur Erfassung von innerhalb eines zu überwachenden Gebiets (G) startenden Raketen ist versehen mit zumindest zwei luftgestützten Überwachungsplattformen (1, 2, 3, 4), die außerhalb oder am Rand des zu überwachenden Gebiets (G) so positioniert sind, dass das Gebiet (G) oder ein Teil des Gebiets (G) zwischen den Überwachungsplattformen (1, 2, 3, 4) gelegen ist, wobei die jeweilige Überwachungsplattform (1, 2, 3, 4) mit zumindest einem Kamerasystem (100, 200, 300, 400) so ausgestaltet ist, dass die Blickrichtungen (10, 20, 30, 40) der Kamerasysteme (100, 200, 300, 400) von zwei einander gegenüber gelegenen Überwachungsplattformen (1, 2, 3, 4) einander zugewandt sind. Dabei ist die Überwachungsplattform (1, 2, 3, 4) jeweils von einem Luftfahrzeug gebildet oder an Bord eines Luftfahrzeugs vorgesehen. Eine Schwenkvorrichtung ist vorgesehen, mit der das Kamerasystem (100, 200, 300, 400) zwischen einer Überwachungsposition und einer Navigationsposition verschwenkbar ausgebildet ist, und die Überwachungsplattform (1, 2, 3, 4) ist ausgebildet, um zur Bestimmung der eigenen Position Sternpeilungen mit einer in die Navigationsposition geschwenkten Kamera des Kamerasystems (100, 200, 300, 400) durchzuführen.

## Beschreibung

### TECHNISCHES GEBIET

Die vorliegende Erfindung betrifft ein Luftraumüberwachungssystem zur Erfassung von innerhalb eines zu überwachenden Gebiets startenden Raketen mit zumindest zwei luftgestützten Überwachungsplattformen gemäß dem Oberbegriff des Patentanspruchs 1. Sie betrifft weiterhin ein Verfahren zur Luftraumüberwachung mit einem derartigen Luftraumüberwachungssystem.

### HINTERGRUND DER ERFINDUNG

Um insbesondere bewaffnete Mittelstreckenraketen oder Langstreckenraketen rechtzeitig vor Erreichen von deren Zielen bekämpfen zu können, ist es erforderlich, die Flugbahn der Rakete zu kennen. Insbesondere dann, wenn diese Raketen mit einem nuklearen Sprengkopf versehen sind, muss eine Bekämpfung dieser Raketen möglichst über dem Territorium erfolgen, von dem aus die Raketen gestartet werden, um das Risiko des diese Raketen startenden Staates zu erhöhen, dass der bei der Zerstörung der Rakete entstehende radioaktive Fall-Out das eigene Territorium radioaktiv kontaminiert. Ist eine derartige Zerstörung über dem Start-Territorium nicht möglich, so sollten derartige Raketen in sehr großer Höhe ihrer Flugbahn zerstört werden, um Kollateralschäden durch konzentrierten radioaktiven Fall-Out zu minimieren. Es ist daher erforderlich, sehr frühzeitig vom Start solcher Raketen Kenntnis zu erlangen und sehr frühzeitig eine zuverlässige Bahnbestimmung der Raketenflugbahn vorzunehmen.

### STAND DER TECHNIK

Aus dem allgemeinen Stand der Technik sind für diesen Überwachungszweck in hohen Umlaufbahnen fliegende Satelliten bekannt, deren Überwachungseinrichtungen von oben auf die Erde gerichtet sind. Diese Überwachungseinrichtungen arbeiten vorzugsweise im Infrarotbereich von 2,6 bis 4,6 µm Wellenlänge. Durch den hohen Störhintergrund von einer Vielzahl von auf der Erde befindlichen Wärmestrahlungsquellen und Sonnenlichtreflexionen auf Wolkenflächen oder Wasserflächen erfassen diese bekannten Überwachungssysteme einen hohen Störhintergrund, der zu Fehlalarmen führen kann.

Andere bekannte Überwachungseinrichtungen sind von Radaranlagen gebildet, die entlang einer erwartenden Raketenflugroute stationiert sind, um so eine fliegende Rakete erfassen und zur Bahnbestimmung verfolgen zu können. Diese Überwachungsmethode erfordert einen sehr großen Aufwand und ist aus politischen Gründen häufig nicht realisierbar. Hinzu kommt, dass derartige Radarstationen nur die Position einer fliegenden Rakete bestimmen und ihren Radarrückstrahlquerschnitt messen können, aber nicht in der Lage sind, eine genauere Identifikation des erfassten Objekts vornehmen zu können. Daher ist es möglich, derartige Radarsysteme durch das Absetzen von Täuschkörpern nutzlos zu machen.

### HINTERGRUND DER ERFINDUNG

Es ist daher eine Aufgabe der vorliegenden Erfindung, ein Luftraumüberwachungssystem anzugeben, welches in der Lage ist, frühzeitig startende Raketen zu erfassen, zu identifizieren und deren Flugbahn zu bestimmen. Des Weiteren ist es eine Aufgabe der vorliegenden Erfindung, ein entsprechendes Verfahren zur Luftraumüberwachung mit einem derartigen Luftraumüberwachungssystem anzugeben.

Der auf das Luftraumüberwachungssystem gerichtete Teil der Aufgabe wird gelöst durch ein Luftraumüberwachungssystem mit den Merkmalen des Patentanspruchs 1.

Dieses erfindungsgemäße Luftraumüberwachungssystem zur Erfassung von innerhalb eines zu überwachenden Gebiets startenden Raketen ist versehen mit zumindest zwei luftgestützten Überwachungsplattformen, die außerhalb oder am Rand des zu überwachenden Gebiets so positioniert sind, dass das Gebiet oder ein Teil des Gebiets zwischen den Überwachungsplattformen gelegen ist, wobei die jeweilige Überwachungsplattform mit zumindest einem Kamerasystem als Sensor so ausgestaltet ist, dass die Blickrichtungen der Kamerasysteme (Sensoren) von zwei einander gegenüber gelegenen Überwachungsplattformen einander zugewandt sind, wobei die Überwachungsplattform jeweils von einem Luftfahrzeug gebildet oder an Bord eines Luftfahrzeugs vorgesehen ist. Dabei ist eine Schwenkvorrichtung vorgesehen, mit der das Kamerasystem zwischen einer Überwachungsposition und einer Navigationsposition verschwenkbar ausgebildet ist, und die Überwachungsplattform ist ausgebildet, um zur Bestimmung der eigenen Position Sternpeilungen mit der in die Navigationsposition geschwenkten Kamera des Kamerasystems durchzuführen.

### VORTEILE

Mit diesem erfindungsgemäßen Luftraumüberwachungssystem ist es möglich, das zu überwachende Gebiet oder den zu überwachenden Teil des betreffenden Gebiets aus zwei Blickrichtungen zu beobachten und ein erfasstes Objekt aus zumindest zwei Richtungen anzupeilen, wodurch eine Positionsbestimmung des Objekts ermöglicht wird. Die Verwendung eines abbildenden Sensors in Form eines Teleskop-Kamerasystems gestattet es, eine Objektidentifikation durch beispielsweise einen Multispektralbildvergleich durchzuführen, sodass durch einen Vergleich der Zielobjekte mit bekannten Zielobjektreferenzbildern festgestellt werden kann, ob es sich bei dem erfassten Objekt um eine Rakete oder beispielsweise um Täuschkörper handelt. Diese Ausgestaltung, bei der eine Schwenkvorrichtung vorgesehen ist, mit der das Kamerasystem zwischen einer Überwachungsposition und einer Navigationsposition verschwenkbar ausgebildet ist, ermöglicht es, das Kamerasystem in der Navigationsposition auch zur Sternennavigation für die eigene Positionsbestimmung zu verwenden. Wird die Sternennavigation mit demselben Kamerasystem durchgeführt wie die Positionsbestimmung eines von der Kamera erfassten Objekts, so neutralisieren sich kamerasystembedingte Messfehler, sodass eine höhere Genauigkeit der Positionsbestimmung des erfassten Objekts erzielt wird.

Besonders vorteilhaft ist es, wenn drei oder mehr Überwachungsplattformen an voneinander beabstandeten Positionen außerhalb oder am Rand des zu überwachenden Gebiets vorgesehen sind. Hierdurch können die Genauigkeit der Positionsbestimmung eines erfassten Objekts und die Genauigkeit der Bahnverfolgung dieses Objekts deutlich verbessert werden.

Vorteilhaft ist es auch, wenn zumindest zwei Paar der Überwachungsplattformen vorgesehen sind, wobei das zu überwachende Gebiet oder ein Teil des zu überwachenden Gebiets zwischen den Überwachungsplattformen eines jeden Paares gelegen ist. Auf diese Weise kann, insbesondere wenn zwei dieser Paare an den "Ecken" des zu überwachenden Gebiets positioniert sind, das gesamte Gebiet zuverlässig überwacht werden und eine schnelle und zuverlässige Positionsbestimmung von erfassten Objekten kann damit durchgeführt werden.

Besonders vorteilhaft ist es, wenn jedes der Kamerasysteme des Luftraumüberwachungssystems zur Erfassung und Bahnverfolgung von in großer Entfernung befindlichen bewegten Objekten ausgebildet ist und zu diesem Zweck ausgestaltet ist mit einer mit einer Kameraoptik versehenen Kamera und einer Lagestabilisierungsvorrichtung für die Kamera und die Kameraoptik, wobei die Kamera versehen ist mit einem ersten Bildsensor mit einem diesem zugeordneten ersten Hochgeschwindigkeitsverschluss; einem zweiten Bildsensor mit einem diesem zugeordneten zweiten Hochgeschwindigkeitsverschluss; wobei die Kameraoptik eine Einrichtung aus optischen Elementen zur Bündelung einfallender Strahlung auf einer strahlungsempfindlichen Oberfläche des ersten Bildsensors und/oder des zweiten Bildsensors mit zumindest einer Spiegelteleskopanordnung und zumindest einer Zielverfolgungsspiegelanordnung aufweist und versehen ist mit einer Antriebseinrichtung für zumindest ein bewegbares Element der Zielverfolgungsspiegelanordnung und einer Steuerungseinrichtung für die Antriebseinrichtung und wobei die Einrichtung aus optischen Elementen eine dem ersten Bildsensor zugeordnete erste Unteranordnung aus optischen Elementen mit einer ersten Brennweite und eine dem zweiten Bildsensor zugeordnete zweite Unteranordnung aus optischen Elementen mit einer zweiten Brennweite aufweist, die kürzer ist, als die erste Brennweite.

Diese lagestabilisierte und mit einer zur Abbildung entfernter Objekte besonders geeigneten Teleskopoptik versehene Kamera ist in der Lage, mittels des über die Steuerungseinrichtung gesteuerten und von der Antriebseinrichtung bewegten Elements, zum Beispiel eines Zielverfolgungsspiegels, mit dem der kürzeren Brennweite zugeordneten Bildsensor das zu überwachende Gebiet abzuscannen, um zum Beispiel das von dem Triebwerksstrahl einer startenden Rakete ausgesandte Licht zu detektieren. Ist eine Detektion eines Objekts erfolgt, so kann mittels des der längeren Brennweite zugeordneten ersten Bildsensors eine vergrößerte Darstellung des detektierten Objekts erhalten werden, wodurch die Identifikation des Objekts erleichtert wird. Auf diese Weise kann festgestellt werden, ob es sich bei dem erfassten Objekt um eine Rakete handelt, und sie kann aufgrund der vergrößerten Darstellung auch identifiziert werden.

Dazu ist der optische Strahlengang zwischen der ersten Unteranordnung und der zweiten Unteranordnung bevorzugt umschaltbar ausgebildet, wobei zur Umschaltung vorzugsweise ein bewegbarer, insbesondere schwenkbarer, Spiegel vorgesehen ist.

Vorzugsweise weist der Bildsensor ein Empfindlichkeitsmaximum im Spektralbereich zwischen 0,7 µm und 1,7 µm Wellenlänge auf. In diesem Wellenlängenbereich geben alle heute bekannten Raketentreibstoffe beim Abbrennen ein zuverlässiges, stabiles Signal von über 1.000.000 Watt/m² ab. Des Weiteren besitzt die Erdatmosphäre in diesem Wellenlängenbereich ein Fenster mit hoher Lichtdurchlässigkeit oberhalb einer Höhe von 15 km, so dass in diesem Spektralbereich eine große Sichtweite ermöglicht ist. In einer bevorzugten Ausführungsform weist der Bildsensor einen, vorzugsweise ungekühlten, Indium-Gallium-Arsenid-CCD-Sensorchip auf. Ein derartiger Sensorchip ist im Spektralbereich von 0,7 µm bis 1,7 µm besonders empfindlich und besitzt eine maximale Empfindlichkeit, die nahe am theoretisch möglichen Empfindlichkeitsgrenzwert liegt. Besonders vorteilhaft ist es, wenn dieser Sensorchip hochauflösend ist und im nahen Infrarotbereich hoch lichtempfindlich und rauscharm ist.

Vorzugsweise ist der jeweilige Hochgeschwindigkeitsverschluss der Kamera so ausgebildet, dass der zugeordnete Bildsensor eine Vielzahl von Einzelbildern in schneller Folge, vorzugsweise mit einer Frequenz von 50 Bildern pro Sekunde, weiter vorzugsweise von 100 Bildern pro Sekunde, aufnehmen kann. Diese schnelle Einzelbildfolge ermöglicht es, mit der erfindungsgemäßen Kamera ein großes Suchvolumen, also einen großen horizontalen und vertikalen Bildwinkel, in schneller Folge abzutasten, so dass die auf diese Weise durchgeführten Kamerascans eine große Zuverlässigkeit für die Detektion von Licht aussendenden bewegten Objekten gewährleisten.

Besonders vorteilhaft ist es, wenn zumindest eine der Unteranordnungen von optischen Elementen einen Barlowlinsensatz, vorzugsweise kombiniert mit einem Field Flattener, aufweist. Ein Barlowlinsensatz ermöglicht es, bei großer Brennweite eine große Lichtdurchlässigkeit und damit eine hohe Empfindlichkeit zu erzielen. Der Field Flattener beseitigt weitgehend die bei Dall-Kirkham- und Ritchey-Cretien-Spiegelteleskopen vorhandene Bildfeldwölbung und ermöglicht damit viel schärfere Aufnahmen mit der Kamera, als im unkorrigierten Zustand.

In einer weiteren bevorzugten Ausführungsform weist die Kamera eine aus mehreren Spektralfiltern bestehende Filteranordnung auf, die jeweils bei Bedarf in den Strahlengang einkoppelbar sind, wobei die Filteranordnung vorzugsweise als Filterrad ausgebildet ist. Eine derartige Filteranordnung, insbesondere ein derartiges schnell drehendes Filterrad mit zum Beispiel drei Bandfiltern, die den gesamten Spektralbereich abdecken, kann nach Einkoppelung in den Strahlengang sequenziell Falschfarbenbilder des Licht- und Wärmeenergie abstrahlenden bewegten Objekts, beispielsweise eines brennenden Raketenschweifs, erstellen. Bei gleichzeitig hoher Auflösung der Kamera, bei der es möglich ist, die Lichtquelle, also beispielsweise den Raketenschweif, auf mehreren Pixeln des Sensors abzubilden, enthalten die Bilder ausreichend Form-, Farb- und Spektralinformation, um eine Identifikation des Zielobjektes durch Multispektralbildkorrelation mit bekannten Referenzzielbildern vornehmen zu können.

Besonders vorteilhaft ist es, wenn das Kamerasystem weiterhin mit einer Zielbeleuchtungsvorrichtung versehen ist, die eine Strahlungsquelle, vorzugsweise eine Laserdioden-Strahlungsquelle oder eine Hochdruck-Xenon-Kurzlichtbogenlampen-Strahlungsquelle, aufweist. Die Strahlungsquelle ist bevorzugt als Laserarray oder Xenon-Kurzlichtbogenlampe mit asphärischer Kollimationsoptik und Pinholekollimator ausgebildet. Mittels der Zielbeleuchtungsvorrichtung kann die einmal erfasste Rakete auch dann weiter erkannt werden, wenn sie selbst kein Licht beziehungsweise keine Wärmestrahlung mehr aussendet oder nur noch eine sehr geringe Strahlung aussendet, wie dies beispielsweise der Fall ist, wenn die Brenndauer des Raketentriebwerks beendet ist. Diese Zielbeleuchtungsvorrichtung, die vorzugsweise von einem Nahinfrarot-Laserdioden-Zielbeleuchtungsgerät oder einem Nahinfrarot-Hochdruck-Xenon-Kurzlichtbogenlampen-Zielbeleuchtungsgerät gebildet ist, beleuchtet die einmal erfasste sich bewegene Rakete und die Kamera empfängt die von der beleuchteten sich bewegenden Rakete reflektierte Strahlung der Zielbeleuchtungsvorrichtung.

Vorzugsweise ist die Zielbeleuchtungsvorrichtung mit der Kameraoptik derart koppelbar, dass die von der Zielbeleuchtungsvorrichtung abgegebene Zielbeleuchtungsstrahlung in den Strahlengang der Kameraoptik zur Bündelung der abgegebenen Strahlung einkoppelbar ist. Durch diese Verwendung desselben optischen Strahlenganges für die Zielbeleuchtung und die Zielabbildung, kann eine sehr genaue Justage der Beleuchtung auf dem Zielobjekt sichergestellt werden, die mit anderen Mitteln nur mit unverhältnismäßig großem Aufwand erreichbar ist. Eine solche Zielbeleuchtungsvorrichtung mit langer Brennweite ermöglicht es, in der Zielentfernung, also im Bereich der sich bewegenden Rakete, einen Lichtfleck mit der mehrfachen Fläche der Rakete zu erzeugen, der so groß ist, dass er die Rakete ausleuchtet, aber noch ausreichend Licht zurück auf den Bildsensor des Kamerasystems reflektiert wird.

Dabei ist es besonders vorteilhaft, wenn die Kameraoptik zur Einkoppelung der Zielbeleuchtungsstrahlung eine Spiegelanordnung aufweist, die so ausgestaltet ist, dass der Strahlengang der Kameraoptik zwischen dem ersten Bildsensor und der Zielbeleuchtungsvorrichtung zeitsynchron mit dem Aussenden des Beleuchtungsimpulses und mit dem Eintreffen von dessen Echoimpuls umschaltbar ist. Bei diesem sogenannten "gated view"-Betrieb wird ein von der Zielbeleuchtungsvorrichtung erzeugter Strahlungspuls durch die Kameraoptik auf das Ziel, also auf die Rakete, gesandt, während der Strahlengang zum zugeordneten Bildsensor unterbrochen ist. Der Takt dieser stroboskopartigen Zielbeleuchtung ist dabei so gewählt, dass die Dauer eines jeden auf das Ziel gesandten Beleuchtungspulses kleiner ist, als die zum Zurücklegen der Strecke vom Kamerasystem zur Rakete und zurück benötigte Zeit. Vorzugsweise ist die Dauer eines jeden auf die Rakete gesandten Beleuchtungspulses mindestens 40%, insbesondere größer als 60%, der zum Zurücklegen der Strecke vom Kamerasystem zur Rakete und zurück benötigten Zeit.

Vorzugsweise ist die Strahlungsquelle der Zielbeleuchtungsvorrichtung ausgebildet, um gepulste Lichtblitze, vorzugsweise im Infrarotbereich, auszusenden, wobei die Intensität der Nahinfrarotlichtblitze vorzugsweise mindestens 1 kW, weiter vorzugsweise 2 kW, beträgt. Die Energiebündelung zusammen mit der hohen Pulsleistung von im Idealfall etwa 2 kW sendet ausreichend Nahinfrarotlicht aus, um eine mehrere hundert Kilometer entferntes Objekt, zum Beispiel die Rakete, so zu beleuchten, dass das dabei vom Objekt reflektierte Licht ausreichend stark ist, um vom Sensor der Kamera noch erfasst zu werden.

Weiter vorzugsweise ist das Kamerasystem mit einer automatisch arbeitenden Bildauswerteeinrichtung, insbesondere einer automatisch arbeitenden Multispektralbildauswerteeinrichtung, versehen oder verbunden, an die die Bilddaten der von der Kamera aufgenommenen Bilder übertragen werden. Mittels dieser Bildauswerteeinrichtung, die vorzugsweise als Multispektralbildauswerteeinrichtung ausgebildet ist, lassen sich bei ausreichender Auflösung und Modulationstiefe der empfangenen Bilder automatisch erfasste Objekte identifizieren. Insbesondere bei Multispektralbildern kann dies durch Multispektralbildkorrelation mit bekannten Referenzzielbildern erfolgen.

Es ist von besonderem Vorteil, wenn das jeweilige Luftfahrzeug ein Höhenluftfahrzeug ist und im Bereich der Stratosphäre, vorzugsweise in etwa 38 km Höhe, positioniert ist. In dieser Höhe befindliche Luftfahrzeuge sind schwer zu orten und zu bekämpfen. Des Weiteren ist dort die Sichtweite aufgrund der dünnen Atmosphäre, insbesondere im Nahinfrarot-Wellenlängenbereich, sehr groß.

Besonders vorteilhaft ist es, wenn die Schwenkvorrichtung, mit der das Kamerasystem zwischen der Überwachungsposition und der Navigationsposition verschwenkbar ist, zusätzlich zur Verschwenkung zwischen der Überwachungsposition und einer Kommunikationsposition ausgebildet ist. Diese Ausgestaltung ermöglicht es, dass in der Kommunikationsposition mittels des Kamerasystems modulierte Strahlung, also zum Beispiel ein Datenstrom, beispielsweise an eine Basisstation oder an andere Überwachungsplattformen des Luftraumüberwachungssystems, übertragen oder von dort empfangen werden kann.

Dabei ist es von Vorteil, wenn die Strahlungsquelle der Zielbeleuchtungsvorrichtung mittels einer Dateneinkopplungsvorrichtung modulierbar ausgebildet ist, um in der Kommunikationsposition mit der ausgesandten modulierten Strahlung Daten, beispielsweise an eine Basisstation oder an andere Überwachungsplattformen des Luftraumüberwachungssystems, übertragen zu können.

Der auf das Verfahren gerichtete Teil der Aufgabe wird gelöst durch das Verfahren mit den Merkmalen des Anspruchs 13.

Dieses Verfahren zur Luftraumüberwachung mit einem erfindungsgemäßen Luftraumüberwachungssystem zeichnet sich dadurch aus, dass mittels zumindest eines Kamerasystems einer jeden Überwachungsplattform der Luftraum oder ein Bereich des Luftraums über dem zu überwachenden Gebiet in einer Scan-Prozedur, bei der das Kamerasystem in einem Scan-Modus arbeitet, systematisch nach Objekten abgesucht wird, die im Verhältnis zu ihrer Umgebung eine signifikant höhere Wärmestrahlung abgeben, wobei das Kamerasystem nach dem Erfassen eines derartigen eine hohe Wärmestrahlung aussendenden Objekts vom Scan-Modus in einem Zielverfolgungsmodus einer Zielverfolgungs-Prozedur umgeschaltet wird, bei dem mittels einer größeren Brennweite ein das erfasste Objekt enthaltender kleinerer Bildausschnitt von der Kamera aufgenommen wird und die Kamera mit diesem sich bewegenden erfassten Objekt mitgeführt wird. Erfindungsgemäß wird das Kamerasystem zum Zweck der Positionsbestimmung aus der Überwachungsposition in eine Navigationsposition verschwenkt und die jeweilige Überwachungsplattform führt zur Bestimmung der eigenen Position Sternpeilungen mit der Kamera ihres in die Navigationsposition verschwenkten Kamerasystems durch. Demnach führt die jeweilige Überwachungsplattform zur Bestimmung der eigenen Position Sternpeilungen mit der Kamera ihres Kamerasystems durch, wodurch, wie schon beschrieben wurde, die Genauigkeit der Positionsbestimmung des erfassten Objekts und von dessen Flugbahnbestimmung verbessert werden.

Eine vorteilhafte Weiterbildung dieses Verfahrens zeichnet sich dadurch aus, dass nach dem Umschalten des Kamerasystems in den Zielverfolgungsmodus mittels eines Bildauswerteverfahrens, insbesondere eines Multispektralbildauswerteverfahrens, eine Objekterkennung für das erfasste Objekt durchgeführt wird, um das Objekt anhand von in einer Datenbank gespeicherten Bilddaten beziehungsweise Multispektral-Referenzziel-Bilddaten zu identifizieren. Auf diese Weise kann zuverlässig festgestellt werden, ob es sich bei dem erfassten Objekt um eine startende Rakete oder möglicherweise um einen Täuschkörper handelt. Weiterhin kann der Raketentyp identifiziert werden, so dass mittels dessen bekannter Flugleistungsdaten ein von der Rakete anvisiertes Zielgebiet bestimmt werden kann. Auch können aufgrund des erkannten Raketentyps spezifische Bekämpfungsmaßnahmen eingeleitet werden.

Bei einer weiteren vorteilhaften Ausbildung wird im Zielverfolgungsmodus des Kamerasystems eine Zielbeleuchtungsvorrichtung aktiviert, wenn das vom erfassten Objekt ausgesandte Wärmestrahlungssignal ausbleibt oder unter einen vorgegebenen Schwellenwert absinkt, so dass die Zielbeleuchtungsvorrichtung das Objekt beleuchtet. Dadurch kann die Rakete auch nach Brennschluss ihrer Triebwerke weiter verfolgt werden, wodurch eine noch zuverlässigere Flugbahnverfolgung und Flugbahnvermessung möglich wird und Täuschmanöver, wie zum Beispiel das Ausstoßen von Täuschkörpern, so frühzeitig erkannt werden können, dass noch das Ergreifen von Gegenmaßnahmen möglich ist.

Insbesondere vorteilhaft ist es, wenn die Blickrichtung des Kamerasystems einer jeden Überwachungsplattform vom Standort der zugehörigen Überwachungsplattform durch den überwachten Bereich des Luftraums des zu überwachenden Gebiets in Richtung Weltraum gerichtet ist. Der Blick der Kamera gegen den dunklen und kalten Weltraum als Hintergrund sorgt aufgrund des reduzierten Hintergrundrauschens für eine noch zuverlässigere Erfassung auch kleinster Licht- oder Wärmequellen, so dass die nutzbare Reichweite des Kamerasystems gegenüber einem auf die Erde gerichteten Beobachtungssystem deutlich verbessert ist.

Von Vorteil ist es auch, wenn nach dem Erfassen eines Objekts durch ein Kamerasystem einer Überwachungsplattform Information über die Blickrichtung und damit über den Sektor des überwachten Luftraums, in welchem das Objekt erfasst wurde, vom erfassenden Kamerasystem an zumindest ein Kamerasystem, vorzugsweise zwei Kamerasysteme, von zumindest einer beziehungsweise zwei weiteren Plattformen übermittelt wird; dass diese weitere(n) Plattform(en) ihre Scanaktivität auf diesen Sektor des Luftraums richten und wenn dann, nachdem zumindest ein weiteres Kamerasystem das Objekt erfasst hat, von den Kamerasystemen, die das Objekt erfasst haben, zeitsynchrone Peilungen auf das Objekt durchgeführt werden, um die jeweils aktuelle Position und die Bewegungsbahn des erfassten Objekts mit hoher Genauigkeit zu bestimmen. Diese Art der kooperativen Objektverfolgung ermöglicht eine präzise Bahnvermessung der Flugbahn des Objekts, auch dann, wenn sich das Objekt in großer Entfernung befindet.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine vereinfachte perspektivische Darstellung eines erfindungsgemäßen Luftraumüberwachungssystems und eines damit durchgeführten Luftraumüberwachungsverfahrens;
- Fig. 2: eine Sicht auf das Luftraumüberwachungssystem der Fig. 1 in Richtung des Pfeils II;
- Fig. 3: eine schematische Darstellung des optischen Aufbaus und der Strahlengänge eines im erfindungsgemäßen Luftraumüberwachungssystem vorgesehenen Kamerasystems;
- Fig. 4: eine schematische Darstellung einer Zielbeleuchtungsvorrichtung des Kamerasystems nach Fig. 2;
- Fig. 5: eine vereinfachte perspektivische Darstellung eines Bahnverfolgungsverfahrens mit dem erfindungsgemäßen Luftraumüberwachungssystem analog der Darstellung in Fig. 1 und
- Fig. 6: eine Sicht auf das Luftraumüberwachungssystem der Fig. 5 in Richtung des Pfeils VI in Fig. 5.

### DARSTELLUNG VON BEVORZUGTEN AUSFÜHRUNGSBEISPIELEN

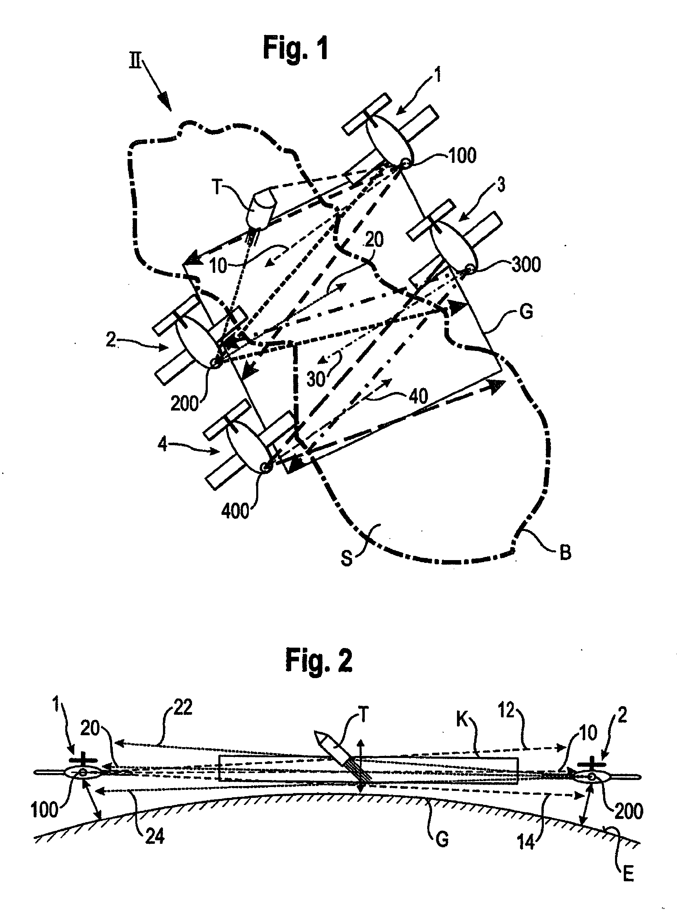

In Fig. 1 ist ein erfindungsgemäßes Luftraumüberwachungssystem in einer perspektivischen Sicht aus dem Weltraum schematisch dargestellt. Die dicke strichpunktierte Linie B bezeichnet die Grenze des Territoriums eines zu überwachenden Staates. An zwei voneinander abgewandten Seiten dieses Territoriums S sind, jeweils voneinander beabstandet zwei Höhenluftfahrzeuge als Überwachungsplattformen 1, 2, 3, 4 positioniert. Die Höhenluftfahrzeuge können beispielsweise in der Weise ausgebildet sein, wie es in der nicht vorveröffentlichten deutschen Patentanmeldung 10 2010 053 372.6 beschrieben ist. Der Offenbarungsinhalt dieser deutschen Patentanmeldung wird vollumfänglich in den Offenbarungsgehalt der vorliegenden Anmeldung einbezogen. Jedes dieser Höhenluftfahrzeuge ist mit zumindest einem Kamerasystem 100, 200, 300, 400 ausgestattet. Aufbau und Wirkungsweise des jeweiligen Kamerasystems werden weiter unten anhand des Kamerasystems 100 näher beschrieben werden. Die anderen Kamerasysteme 200, 300, 400 sind in derselben Weise aufgebaut, so dass von deren Beschreibung zur Vermeidung von Wiederholungen abgesehen wird.

Die Blickrichtungen 10, 20; 30, 40 der Kamerasysteme 100, 200; 300, 400 zweier einander gegenüber gelegener Überwachungsplattformen 1, 2; 3, 4 sind einander zugewandt, wobei sich der zu überwachende Luftraum oberhalb des Territoriums S zwischen den beiden jeweils ein Paar bildenden Überwachungsplattformen 1, 2 und 3, 4 erstreckt. Von den Blickwinkeln der jeweiligen Kamerasysteme 100, 200, 300, 400 wird auf diese Weise ein zu überwachendes Gebiet G erfasst.

Fig. 2 zeigt das Luftraumüberwachungssystem der Fig. 1 in einer Blickrichtung, die dem Pfeil II in Fig. 1 entspricht. Darin ist zu erkennen, wie die Blickrichtungen 10, 20 des jeweils an Bord der Überwachungsplattform 1, 2 befindlichen Kamerasystems 100, 200 aufeinander zu gerichtet sind und wie von den oberen und unteren Randstrahlen 12, 14; 22, 24 der jeweiligen Blickrichtung 10; 20 ein Überwachungskorridor K des überwachten Gebiets G in Vertikalrichtung aufgespannt wird, sodass von dem überwachten auf der Erdoberfläche E gelegenen Gebiet G und dem Überwachungskorridor K ein Volumen als Luftraumbereich V definiert wird, das von den an Bord der Überwachungsplattformen 1, 2, 3, 4 befindlichen Kamerasystemen 100, 200, 300, 400 vorzugsweise lückenlos überwacht wird.

Bevor auf die Art und Weise eingegangen wird, wie die Luftraumüberwachung erfolgt, werden nachstehend der Aufbau und die Funktionsweise der an Bord der Überwachungsplattformen 1, 2, 3, 4 befindlichen Kamerasysteme 100, 200, 300, 400 am Beispiel des Kamerasystems 100 beschrieben.

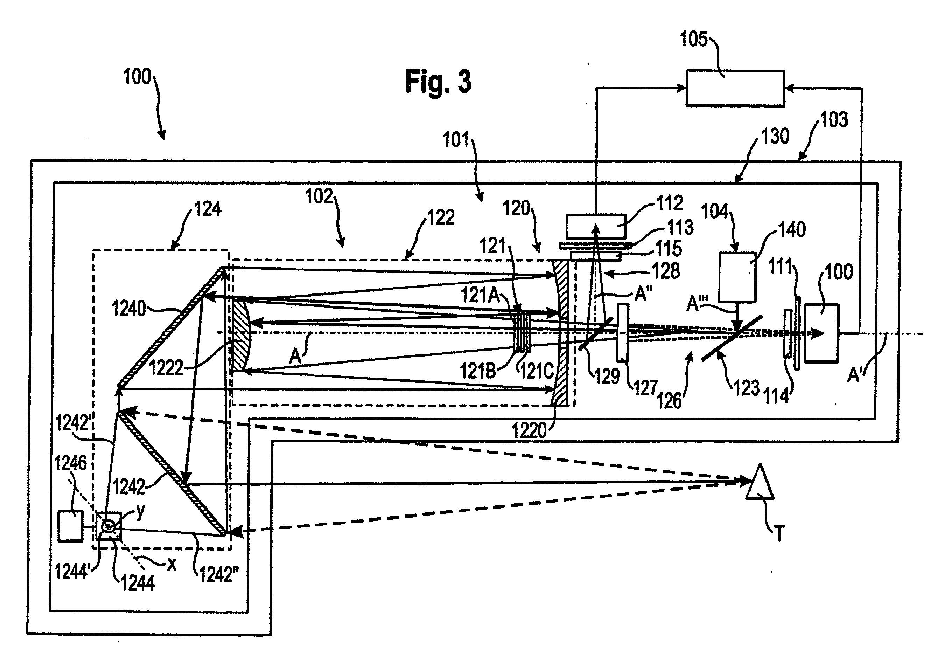

Das Kamerasystem 100 weist eine mit einer Kameraoptik 102 versehene Kamera 101 auf, die auf einer Kameraplattform 103 angeordnet ist. Die Kameraplattform 103 ist mit einer Lagestabilisierungsvorrichtung 130 für die Kamera 101 und die Kameraoptik 102 versehen, die in Fig. 3 ebenfalls nur schematisch dargestellt ist.

Die Kamera 101 weist einen ersten Bildsensor 110 mit einem Hochgeschwindigkeitsverschluss 111 auf. Des Weiteren ist dem ersten Bildsensor 110 eine hochfrequente Sichtlinienstabilisierungs- und Bildderotationseinheit 114 zugeordnet. Der erste Bildsensor 110 weist eine optische Achse A' auf, die der optischen Achse A der Kameraoptik 102 entspricht.

Ein zweiten Bildsensor 112 mit einem diesem zugeordneten zweiten Hochgeschwindigkeitsverschluss 113 und einer hochfrequenten Sichtlinienstabilisierungs- und Bildderotationseinheit 115 ist zwischen der Kameraoptik 102 und dem ersten Bildsensor 110 in einem Winkel zur optischen Achse A der Kameraoptik 102 angeordnet, wobei der in Fig. 3 gezeigte Winkel der optischen Achse A der Kameraoptik 102 und der auf den zweiten Bildsensor 112 gerichteten optischen Achse A" 90° beträgt.

Die hochfrequenten Sichtlinienstabilisierungs- und Bildderotationseinheiten 114, 115 erfassen mit Drehbeschleunigungsmessern am Zielverfolgungsspiegel 1242 hochfrequente Drehungen des Spiegels im Intertialsystem und berechnen daraus eine Korrekturbewegung für den Spiegel, die die Sichtlinie des Spiegelteleskops 122 im Raum stabilisiert. Die jeweilige Bildderotationseinheit kompensiert dabei ungewollte Bilddrehungen, die durch Bewegungen des Zielverfolgungsspiegels 1242 hervorgerufen werden, durch Gegendrehungen mit einem Hilfsspiegelsystem oder durch Gegendrehen der ganzen Kamera 101 um die optische Achse A'.

Die beiden Bildsensoren 110, 112 sind vorzugsweise im nahen Infrarotbereich hochempfindlich und beispielsweise von einem InGaAs CCD-Chip mit vorzugsweise 30 µm Pixelgröße und mit einer Bildfolgefrequenz von maximal 100 Hz gebildet. Die Sensoren 110, 112 sind vorzugsweise hoch empfindlich im Wellenlängenbereich von 0,90 µm bis 1,70 µm und besitzen eine bevorzugte Bildgröße von 250 x 320 Bildpunkten, um eine hohe Bildauslesefrequenz von 100 Bildern pro Sekunde zu erreichen.

Die Kameraoptik 102 weist eine Einrichtung 120 aus optischen Elementen zur Bündelung einfallender Strahlung auf die strahlungsempfindliche Oberfläche des Bildsensors 110 und/oder des zweiten Bildsensors 112 auf. Diese optische Einrichtung 120 ist versehen mit einer Spiegelteleskopanordnung 122, einer Zielverfolgungsspiegelanordnung 124, einer dem ersten Bildsensor 110 zugeordneten Unteranordnung 126 aus optischen Elementen mit einer ersten Brennweite f1 und einer dem zweiten Bildsensor 112 zugeordneten zweiten Unteranordnung 128 aus optischen Elementen mit einer zweiten Brennweite f2. Die zweite Brennweite f2 ist kürzer als die erste Brennweite f1. Im Strahlengang der ersten Unteranordnung 126 ist ein Fluorite Flatfield Corrector (FFC) 127 vorgesehen. In dem gezeigten bevorzugten Ausführungsbeispiel beträgt die Brennweite f1 der Kameraoptik 102 mit der ersten Unteranordnung 126, bei der das von der Kameraoptik 102 eingefangene Bild auf dem ersten Bildsensor 110 abgebildet wird, 38,1 m. Die Brennweite f2 der Kameraoptik 102 mit der zweiten Unteranordnung 128, bei welcher das von der Kameraoptik 102 eingefangene Bild auf dem zweiten Bildsensor 112 abgebildet wird, beträgt 2,54 m.

Das Spiegelteleskop 122 ist in diesem Ausführungsbeispiel vorzugsweise gebildet von einem IR-Dall-Kirkham- oder einem IR-Ritchey-Cretien-Teleskop mit Flatfield-Corrector und Barlowlinsen zur Brennweitenverlängerung und weist eine Apertur von 12,5" (= 31,75 cm) auf. Dieses Teleskop ist besonderes für den nahen Infrarotbereich geeignet. Die Spiegel 1220, 1222 des Spiegelteleskops 122 sind vorzugsweise mit einer Gold-Oberflächenverspiegelung versehen und daher besonders für den Einsatz als Infratrot-Teleskopspiegel geeignet.

Der optische Strahlengang der Kameraoptik 102 mit deren optischer Achse A ist mittels eines umschaltbaren, vorzugsweise schwenkbaren, Spiegels 129 zwischen dem optischen Strahlengang der ersten Unteranordnung 126 mit der auf den ersten Bildsensor 110 gerichteten optischen Achse A' und der zweiten optischen Unteranordnung 128 mit der auf den zweiten Bildsensor 112 gerichteten optischen Achse A" umschaltbar. Auf diese Weise kann das von der Kameraoptik 102 eingefangene Bild entweder auf dem ersten Bildsensor 110 oder auf dem zweiten Bildsensor 112 abgebildet werden.

Die Zielverfolgungsspiegelanordnung 124, die auf der von den Bildsensoren 110, 112 abgewandten Seite der Spiegelteleskopanordnung 122 vorgesehen ist, weist einen vor der Spiegelteleskopanordnung 122 gelegenen ersten Umlenkspiegel 1240 sowie einen bewegbaren zweiten Umlenkspiegel 1242 auf. Dieser zweite Umlenkspiegel 1242 ist mittels in der Figur nur schematisch dargestellter Halterungen 1242', 1242" an einem bewegbaren Element 1244' einer Antriebseinrichtung 1244 derart angebracht, dass der zweite Umlenkspiegel 1242 um eine erste Achse x und eine rechtwinklig zu dieser gelegene zweite Achse y mittels der an der Kameraplattform 103 angebrachten Antriebseinrichtung 1244 schwenkbar ist. Zur Steuerung der Antriebseinrichtung 1244 ist eine in Fig. 3 nur schematisch dargestellte Steuerungseinrichtung 1246 vorgesehen.

In der Spiegelteleskopanordnung 122 ist eine Filteranordnung 121 vorgesehen, die mehrere Spektralfilter 121 A, 121 B, 121 C aufweist. Diese Filter sind jeweils bei Bedarf einzeln in den Strahlengang einkoppelbar, wozu die Filteranordnung als Filterrad ausgebildet sein kann. Die Filter der Filteranordnung 121 sind für unterschiedliche Wellenlängenbereiche im Gesamtbereich von 0,90 µm bis 1,70 µm durchlässig, sodass mit jeweils einem Filter, der als Sperrfilter wirkt, ein Teil des einfallenden Lichts aus diesem Wellenlängenbereich ausgefiltert werden kann.

Im Bereich der ersten Unteranordnung 126 ist eine Zielbeleuchtungsvorrichtung 104 mit einer Strahlungsquelle 140 vorgesehen. Die Strahlungsquelle 140 ist als Laser-Strahlungsquelle, vorzugsweise als Hochdruck-Xenon-Kurzlichtbogenlampe mit asphärischer Kollimationsoptik und Pinholekollimator als Blitzbeleuchtungsvorrichtung mit Einkopplung über einen Hochgeschwindigkeitssektorspiegel 123, ausgestaltet. Die Strahlungsquelle 140 sendet Licht entlang einer optischen Achse A'" aus, die quer, vorzugsweise rechtwinklig zur optischen Achse A der Kameraoptik 102 verläuft. Im Bereich des Schnittpunktes der optischen Achsen A und A'" ist eine bewegbare Spiegelanordnung 123 vorgesehen, die im gezeigten Beispiel aus einer rotierenden Sektorblende besteht, deren geschlossene Sektorelemente verspiegelt sind, um das entlang der optischen Achse A'" ausgesandte Licht in Richtung der optischen Achse A der Kameraoptik 102 umzulenken, und deren offene Sektorelemente einen Lichtdurchlass von der Kameraoptik 102 auf den ersten Bildsensor 110 zulassen. Auf diese Weise kann abwechselnd Licht von der Zielbeleuchtungsvorrichtung 104 durch die Kameraoptik 102 auf ein Ziel T und vom Ziel T reflektiertes Licht zurück durch die Kameraoptik 102 auf den ersten Bildsensor 110 gelenkt werden, wie weiter unten noch beschrieben werden wird.

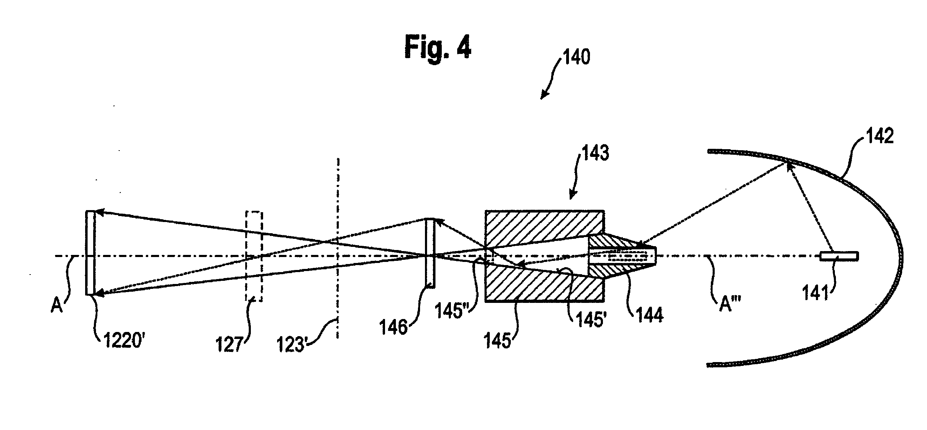

Fig. 4 zeigt einen beispielhaften Aufbau der in Fig. 3 nur symbolisch dargestellten Strahlungsquelle 140 der Zielbeleuchtungsvorrichtung 104. Diese Strahlungsquelle 140 ist mit einer Xenon-Kurzbogenlampe ausgestattet und besitzt beispielsweise eine elektrische Leistung von 12 kW und eine Strahlungsleistung im nahen Infrarotbereich von 1.100 W.

In einem elliptischen Reflektor 142 ist eine Lichtbogenlampe 141 angeordnet, die einen Kurzlichtbogen von zirka 14 mm Länge und 2,8 mm Dicke erzeugt. Das von diesem Lichtbogen ausgesandte Licht wird vom elliptischen Reflektor 142 auf einen Kondensor 143 geleitet, der an seiner Lichteintrittsseite mit einem Saphirglas-Hohlkegel 144 als Kondensoreintritt versehen ist und einen Lochblendenblock 145 aufweist. Der Lochblendenblock 145 weist eine sich von der Lichteintrittsseite zur Lichtaustrittsseite verjüngende Licht-Durchgangsöffnung 145' mit einer Austrittsapertur 145" auf. Die Licht-Durchgangsöffnung 145' besitzt eine polierte Goldoberfläche. Der Lochblendenblock 145 ist flüssigkeitsgekühlt. In der lichteintrittsseitigen größeren Öffnung der Licht-Durchgangsöffnung 145' ist der Saphirglas-Hohlkegel 144 mit seinem lichtaustrittsseitigen Ende eingesetzt, wie in Fig. 4 zu sehen ist.

Hinter dem Lochblendenblock 145 ist eine Befeuchtungsfeldlinse 146 angeordnet, die die Austrittsapertur 145" des Lochblendenblocks durch den Fluorid Flatfield Corrector 127 auf die Apertur 1220' der Spiegelteleskopanordnung 122 (Fig. 3) abbildet. Zur Vereinfachung der Darstellung des Strahlengangs in Fig. 4 ist dort die im Bereich der strichpunktierten Linie 123' mittels der Spiegelanordnung 123 erfolgende Umlenkung der optischen Achse A'" der Strahlungsquelle 140 auf die optische Achse A der Spiegelteleskopanordnung 122 nicht gezeigt.

Nachstehend wird die Funktionsweise des erfindungsgemäßen Kamerasystems erläutert.

Die Kamera 101 wird mit aktiviertem zweiten Bildsensor 112 und in den Strahlengang A der Spiegelteleskopanordnung 122 eingeschwenktem Umlenkspiegel 129 auf das zu überwachende Zielgebiet G gerichtet. Mittels eines (nicht gezeigten) Steuerungscomputers einer Überwachungseinrichtung, deren Bestandteil das Kamerasystem 100 ist, wird die Steuerungseinrichtung 1246 für die Antriebseinrichtung 1244 des zweiten Umlenkspiegels 1242 derart gesteuert, dass der als Zielverfolgungsspiegel agierende zweite Umlenkspiegel 1242 eine das Zielgebiet zeilenweise abscannende Suchbewegung durchführt. Während dieser das Zielgebiet abscannenden Suchbewegung nimmt der zweite Bildsensor 112 mit einer hohen Bildfolgefrequenz von beispielsweise 100 Hz flächendeckend Bilder vom Zielgebiet auf und leitet diese an eine Bildauswerteeinrichtung 105 der übergeordneten Überwachungseinrichtung weiter, die beispielsweise in einer Kontrollstation 5 vorgesehen ist. Während dieser Aufnahmen wird abwechselnd jeweils einer der Spektralfilter 121A, 121B, 121C in den Strahlengang der Spiegelteleskopanordnung 122 in schneller Folge eingeschwenkt, so dass jede vom zweiten Bildsensor 112 aufgenommene Aufnahme des Zielgebiets mit einem der Spektralfilter 121 A, 121 B, 121C belichtet wird. Mehrere aufeinander folgende Bilder ergeben damit übereinandergelegt ein Nahinfrarot-Falschfarbenbild des Ziels und gleichzeitig eine Multispektralanalyse des Zielgebiets im nahen Infrarotbereich. Dieses Falschfarbenbild wird dann an die Bildauswerteeinrichtung 105 zur Auswertung weitergeleitet, so dass dort eine automatische multispektrale Zielerkennung und Zielidentifizierung durchgeführt werden kann, wobei Falschziele als solche erkannt und in der relevanten Zielbahnverfolgungsdatei und der relevanten Zielobjektidentifizierungsdatei als ungefährlich markiert werden.

Wird ein Ziel T erkannt, beispielsweise eine Wärmestrahlung abgebende Rakete, so wird der erste Bildsensor 110 aktiviert, wozu der Umlenkspiegel 129 aus dem Strahlengang A der Spiegelteleskopanordnung 122 herausgeschwenkt wird, so dass das von der Spiegelteleskopanordnung 122 eingefangene Licht auf den ersten Bildsensor 110 gelangen kann. Gleichzeitig wird im übergeordneten Steuerungscomputer eine Zielverfolgungsprozedur aktiviert, die dafür sorgt, dass der als Zielverfolgungsspiegel wirkende Umlenkspiegel 1242 so angesteuert wird, dass er das sich bewegende Ziel T derart verfolgt, dass das Ziel T stets auf dem ersten Bildsensor 110 abgebildet wird. Auch der Bildsensor 110 nimmt das Ziel T mit einer schnellen Bildfolgefrequenz von beispielsweise 100 Hz auf und leitet die gewonnenen Bildsignale an die Bildauswerteeinrichtung 105 weiter. Dort erfolgt dann eine Objektidentifizierung des Ziels T anhand der aufgenommenen Bilddaten.

Stellt das Ziel T seine eigene Strahlungsaktivität in dem Wellenlängenbereich, für den die Kamera 101 empfindlich ist, ein, was beispielsweise beim Brennschluss der Triebwerke einer startenden Rakete (als Ziel T) der Fall ist, so werden die Zielbeleuchtungsvorrichtung 104 des erfindungsgemäßen Kamerasystems und die Spiegelanordnung 123 aktiviert, so dass deren Sektorblendenrad in Rotation versetzt wird. In Folge dessen wird die von der Strahlungsquelle 140 der Zielbeleuchtungsvorrichtung 104 ausgesendete hochenergetische Strahlung an einem verspiegelten Sektorelement der Spiegelanordnung 123 umgelenkt und in den Strahlengang der Spiegelteleskopanordnung 122 eingeleitet und über die Zielverfolgungsspiegelanordnung 124 auf das Ziel T geleitet. Dieser hochenergetische Lichtblitz wird vom Ziel T reflektiert und trifft über die Zielverfolgungsspiegelanordnung 124 und die Spiegelteleskopanordnung 122 zurück auf die rotierende Sektorblende 123, bei der sich zu diesem Zeitpunkt ein offenes Sektorelement im Strahlengang befindet, so dass das vom Ziel T reflektierte Licht durch die offene Sektorblende der Spiegelanordnung 123 hindurchtreten kann und auf den ersten Bildsensor 110 gelangt. Der Bildsensor 110 kann so mit Hilfe der von der Zielbeleuchungsvorrichtung 104 mittels der rotierenden Sektor-Spiegelanordnung 123 stroboskopartig ausgesandten Strahlung Aufnahmen vom Ziel T machen, auch wenn das Ziel T keine eigene Strahlung mehr aussendet.

Dieses Kamerasystem 100 ist auf diese Weise in der Lage, auf eine Entfernung von bis zu 1.200 km auf der vom Kamerasystem abgewandten Seite des Überwachungsgebietes G eine dort startende eine startende Rakete mit brennendem Triebwerk zu erfassen und zu identifizieren. Die Rakete kann auch nach Brennschluss des Triebwerks mittels der zuschaltbaren Zielbeleuchtungsvorrichtung 104 auf ihrer Bahn weiter verfolgt werden. Die Bahnverfolgung einer entdeckten Rakete nach Brennschluss wird von den jeweils am nächsten gelegenen Kamerasystemen aufgenommen, die dann in der Geometrie in dem Beispiel in Fig. 1 nur mehr eine Entfernung von maximal 500 km mit der Zielbeleuchtungseinrichtung überbrücken müssen.

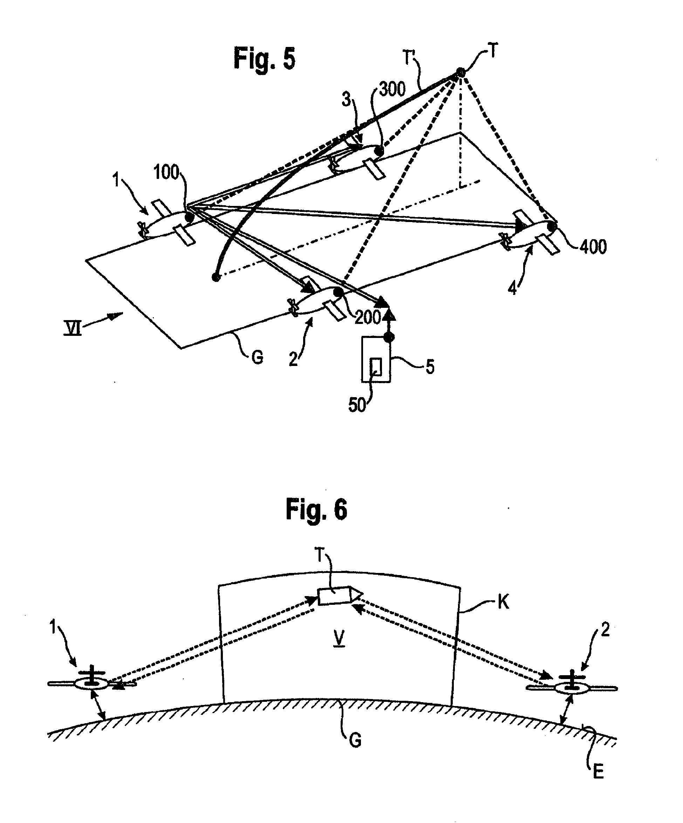

In Fig. 5 ist schematisch dargestellt, wie das kooperative Suchverfahren mittels mehrerer luftgestützter Überwachungsplattformen 1, 2, 3, 4 funktioniert.

Die einzelnen Überwachungsplattformen 1, 2, 3, 4 stehen untereinander und mit der in der Luft oder am Boden befindlichen Kontrollstation 5 in gegenseitiger Kommunikationsverbindung, wie es durch die von der Überwachungsplattform 1 ausgehenden Doppellinienpfeile in Fig. 5 am Beispiel der ersten Überwachungsplattform 1 dargestellt ist.

Im gezeigten Beispiel bilden jeweils zwei Überwachungsplattformen 1, 2 und 3, 4 ein Überwachungsplattform-Paar. Die Überwachungsplattformen 1, 2; 3, 4 eines jeden Paares sind so angeordnet, dass das zu überwachende Gebiet G beziehungsweise der zu überwachende Teil dieses Gebiets zwischen ihnen liegt (Fig. 6). Das von dem Gebiet G und dem Korridor K aufgespannte Volumen, das den Luftraumbereich V bestimmt, bildet dadurch ein von den Kamerasystemen der Überwachungsplattformen 1, 2, 3, 4 lückenlos erfasstes Suchvolumen.

Dieses Suchvolumen wird von den Kamerasystemen 100, 200, 300, 400 zunächst im Überwachungsmodus durch Aufnahme von aneinandergereihten Einzelbildern in kurzen Zeitabständen, beispielsweise mit einer Frequenz von 100 Hz, zeilenweise abgescannt. Die Überwachungszeitabstände werden dabei so gewählt, dass eine startende Rakete auf dem Weg durch das Suchvolumen mindestens dreimal erfasst wird. Sobald eine startende Rakete von dem Suchscan eines ersten Kamerasystems erfasst wird (beispielsweise des Kamerasystems 100), wird das Kamerasystem 200 der gegenübergelegenen zweiten Überwachungsplattform 2 benachrichtigt. Das Kamerasystem 200 dieser zweiten Überwachungsplattform 2 richtet dann seinen Suchbereich auf das von der ersten Überwachungsplattform beobachtete Startgebiet der Rakete beziehungsweise den Teil des überwachten Luftraumvolumens V, in dem das erste Kamerasystem 100 die Rakete T erfasst hat. Anschließend wird mittels beider Kamerasysteme 100, 200 des Paares von Überwachungsplattformen 1, 2 zeitsynchron getaktet eine Kreuzpeilung auf die erfasste Rakete T durchgeführt, wie in Fig. 6 dargestellt ist. Auf diese Weise wird die aktuelle Position der Rakete T bestimmt. Diese kooperative Positionsbestimmung der Rakete T wird hintereinander mindestens dreimal durchgeführt, so dass aus den so gewonnenen mindestens drei Positionswerten die Flugbahn T' der Rakete bestimmt wird. Vorzugsweise werden jedoch mehr als drei dieser kooperativen Positionsbestimmungen durchgeführt, wodurch die Vermessung der Flugbahn der Rakete noch genauer wird. Dabei wird aus den zeitlich zurückliegenden Positionsbestimmungsdaten der Raketenposition in einem Kontrollrechner 50 der Kontrollstation 5 mittels eines Bahnverfolgungs-Kalman-Filters eine Flugbahnprojektion in der Zukunft berechnet. Daraufhin wird bei zumindest einem der Kamerasysteme 100, 200, 300, 400 die langbrennweitige Zielverfolgungsprozedur aktiviert und die Kamerasysteme, bei denen diese Zielverfolgungsprozedur aktiviert worden ist, werden zeitlich synchron getaktet auf die jeweils vorausberechnete Raketenposition ausgerichtet. Dort werden hochauflösende Aufnahmen der noch einen Triebwerkstrahl aufweisenden Rakete angefertigt.

Aus den mit diesen Aufnahmen verbundenen Peilungen lassen sich dann die genaue Position der Rakete im Raum sowie ihr Geschwindigkeitsvektor berechnen. Wie bereits beschrieben worden ist, werden nacheinander Aufnahmen der Rakete T in drei oder mehr unterschiedlichen Infrarot-Wellenlängenbereichen mittels der Filteranordnung 121 aufgenommen und durch Überlagern zu einem Mehrfarben-Falschfarbenbild der Rakete vereinigt. Diese Bilder werden anschließend mit einem Multispektralbild-Auswertungsprogramm bearbeitet und es wird eine Klassifizierung und Identifizierung der georteten Rakete ausgeführt. Die zusammengesetzten Komposit-Multispektralbilder besitzen bei einer ausreichenden Anzahl von addierten Einzelbildern durch die Mittelung über die vielen Einzelbilder ein viel besseres Signal-Zustör-Verhältnis, als die Rohbilder, wodurch mittels dieser Komposit-Multispektralbilder eine bessere Erkennungsrate erzielt wird. Diese multispektrale Aufnahme- und Auswertetechnik ermöglicht es, eine echte Rakete von Falschzielen und Störkörpern zu unterscheiden.

Ist der Triebwerksstrahl der einmal erfassten Rakete T erloschen, so schaltet sich, wie bereits beschrieben, die Zielbeleuchtungsvorrichtung 104 des jeweiligen Kamerasystems 100, 200, 300, 400 zu und die Positionsbestimmung der Rakete kann dadurch auch nach Brennschluss des Triebwerks in der beschriebenen zeitlich konsekutiven Weise weiter fortgeführt werden. So können auch nach Brennschluss des Triebwerks der erfassten Rakete T weitere Flugbahndaten der Rakete ermittelt werden, sodass die Flugbahnbestimmung weiter präzisiert wird.

Die Reichweite der Zielbeleuchtungsvorrichtung muss bei günstiger Verteilung der Kamerasysteme maximal 500 km betragen, wie aus der Geometrie von Fig. 5 zu entnehmen ist. Dann reicht die Intensität des Beleuchtungsimpulses aus um eine Echoimpuls zu erzeugen, der gut nachweisbar ist. Die Rakete T muss in Reichweite von mindestens drei aktiven Kamerasystemen sein und es müssen für eine Triangulation der Raketenposition geeignete Sichtlinien mit ausreichend großen Schnittwinkeln zwischen dem jeweiligen Kamerasystem und der Rakete bestehen. Ist dies der Fall, werden die Zielbeleuchtungsvorrichtungen 104 von zumindest drei Kamerasystemen für die Zielerfassung aktiviert. Die Kamerasysteme versuchen dann, möglichst zeitsynchron die Zielposition auf der extrapolierten Zielflugbahn anzupeilen, so dass die Beleuchtungsimpulse aller drei Kamerasysteme zur selben Zeit am Ziel eintreffen. Wenn ein erster Ortungsversuch fehlschlägt, wird zeitsynchron die nähere Umgebung der extrapolierten Zielposition abgescannt bis die Rakete T wieder aufgefasst worden ist. Durch die zeitsynchrone Beleuchtung des Ziels von mehreren Zielbeleuchtungsvorrichtungen wird die nutzbare Beleuchtung der Rakete T mit der Anzahl der aktivierten Zielbeleuchtungsvorrichtungen vervielfacht, wenn diese Zielbeleuchtungsvorrichtungen auf dieselbe Seite der Rakete T gerichtet sind. Dabei ist es von Vorteil, wenn der gesamte nutzbare Spektralbereich in Monochrombildern erfasst wird, um höchste Empfindlichkeit zu erzielen.

Wenn die Rakete aufgefasst worden ist, wird mittels eines Kamera-Scans in der Umgebung der Rakete nach weiteren Teilen von ihr gesucht und eine Flugbahnverfolgung wird für alle erkannten Objekte durchgeführt. Die so ermittelten Flugbahnen unterschiedlicher Objekte werden an den Kontrollrechner 50 gesandt und dort als unterschiedliche Flugbahnspuren in einer Zielverfolgungsdatei abspeichert, die laufend aktualisiert wird. Auf diese Weise kann erkannt werden, ob eine Rakete beispielsweise mehrere Tochterflugkörper absetzt, die dazu vorgesehen sind, unterschiedliche Ziele anzugreifen. Wenn die Flugbahnen aller erfassten Objekte stabil vermessen worden sind, werden weitere Messungen unter Verwendung der zuschaltbaren Spektralfilter 121 A, 121 B, 121C durchgeführt. Diese Mehrzahl von Spektralaufnahmen eines jeden erfassten Objekts werden dann zu Komposit-Multispektralbildern zusammengefügt, um damit eine Identifikation der erfassten Objekte mittels eines Multispektral-Bilderkennungsverfahrens zu ermöglichen. Auf diese Weise können Einfach- und Mehrfachsprengköpfe, ausgebrannte Raketenoberstufen und Täuschkörper erkannt und harmlose Teile der Rakete von gefährlichen Teilen unterschieden werden.

Zur Positionsbestimmung und Lagebestimmung einer jeden Überwachungsplattform 1, 2, 3, 4 werden nicht nur Satellitennavigationsdaten (GPS-Satellitensignale) und Trägheitsnavigationsdaten verwendet, sondern es wird auch eine Drehlagebestimmung durch Sternbeobachtung mittels eines Stellar-Attitude-Referenz-Systems durchgeführt, wobei die jeweilige Kamera des Kamerasystems der Überwachungsplattform auf einen oder mehrere Sterne gerichtet wird. Durch Vergleich mit den Daten einer in einer Datenbank mitgeführten Sternkarte werden die drei Lagewinkel im Raum bestimmt. Durch Verwendung desselben Teleskop-Kamerasystems, sowohl zu Lagewinkelbestimmung der Überwachungsplattform, als auch zur Sichtlinienwinkelbestimmung des angepeilten Zieles, heben sich Justagefehler der Kameraoptik und von Winkelsensoren des Kamerasystems weitgehend auf, wodurch die Restgenauigkeit der Positionsdaten der angepeilten Ziele verbessert wird. Berechnungen haben gezeigt, dass durch die auf diese Weise erfolgende Hinzunahme einer Sternennavigation zur herkömmlichen Satellitennavigation die Bahndaten einer erfassten Rakete um das Fünfzigfache genauer ermittelt werden können, als nur mit einer Satellitennavigation. Hinzu kommt, dass durch diese bessere Vermessungsgenauigkeit der Luftraumbereich, in dem sich das Ziel bei künftigen Messungen befinden kann, viel kleiner ist, sodass eine Zielerfassung mit extrapolierten Bahndaten viel schneller erfolgen kann.

Durch die vorstehend beschriebene kombinierte Bilderkennung, die Beobachtung von Aktivitäten der erfassten Rakete und die Flugbahnanalyse können die Ziele der angreifenden Rakete beziehungsweise der von ihr abgesetzten Mehrfachsprengköpfe frühzeitig erkannt werden, sodass die Zeit für die Vorbereitung der Raketenabwehr gegenüber herkömmlichen Methoden vergrößert wird und die angreifende Rakete beziehungsweise die angreifenden Mehrfachsprengköpfe weit von ihren Zielen entfernt abgefangen werden können.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Überwachungsplattform
- 2: Überwachungsplattform
- 3: Überwachungsplattform
- 4: Überwachungsplattform
- 10: Blickrichtung
- 12: obere Randstrahlen
- 14: obere Randstrahlen
- 20: Blickrichtung
- 22: obere Randstrahlen
- 24: obere Randstrahlen
- 30: Blickrichtung
- 40: Blickrichtung
- 100: Kamerasystem
- 101: Kamera
- 102: Kameraoptik
- 103: Kameraplattform
- 130: Lagestabilisierungsvorrichtung
- 110: erster Bildsensor
- 111: Hochgeschwindigkeitsverschluss
- 112: zweiter Bildsensor
- 113: Hochgeschwindigkeitverschluss
- 114: hochfrequente Sichtlinienstabilisierungs- und Bildderotationseinheit
- 115: hochfrequente Sichtlinienstabilisierungs- und Bildderotationseinheit
- 120: Einrichtung
- 121: Filteranordnung
- 121A: Spektralfilter
- 121B: Spektralfilter
- 121C: Spektralfilter
- 122: Spiegelteleskopanordnung
- 123: Spiegelanordnung
- 123': strichpunktierte Linie
- 124: Zielverfolgungsspiegelanordnung
- 126: erste Unteranordnung
- 127: Fluorite Flatfield Corrector
- 128: zweite Unteranordnung
- 129: Umlenkspiegel
- 130: Lagestabilisierungvorrichtung
- 140: erste Strahlungsquelle
- 141: Lichtbogenlampe
- 142: Reflektor
- 143: Kondensor
- 144: Saphirglas-Hohlkegel
- 145: Lochblendenblock
- 145': Licht-Durchgangsöffnung
- 145": Austrittsapertur
- 146: Beleuchtungsfeldlinse
- 200: Kamerasystem
- 300: Kamerasystem
- 400: Kamerasystem
- 1220: Spiegel
- 1220': Apertur
- 1222: Spiegel
- 1240: erster Umlenkspiegel
- 1242: zweiter Umlenkspiegel
- 1242': Halterung für Umlenkspiegel 1242
- 1242": Halterung für Umlenkspiegel 1242
- 1244: Antriebseinrichtung
- 1244': bewegbares Element der Antriebseinrichtung 1244
- 1246: Steuerungseinrichtung
- A: optische Achse
- A': optische Achse
- A": optische Achse
- A"': optische Achse
- B: Grenze des Territoriums
- E: Erdoberfläche
- G: überwachtes Gebiet
- K: Überwachungskorridor
- S: Territorium
- T: Ziel
- T': Flugbahn
- V: Luftraumbereich
- f1: erste Brennweite
- f2: zweite Brennweite
- x: erste Achse
- y: zweite Achse

## Patentansprüche

1. Luftraumüberwachungssystem zur Erfassung von innerhalb eines zu überwachenden Gebiets (G) startenden Raketen mit zumindest zwei luftgestützten Überwachungsplattformen (1, 2, 3, 4), die außerhalb oder am Rand des zu überwachenden Gebiets (G) so positioniert sind, dass das Gebiet (G) oder ein Teil des Gebiets (G) zwischen den Überwachungsplattformen (1, 2, 3, 4) gelegen ist, wobei die jeweilige Überwachungsplattform (1, 2, 3, 4) mit zumindest einem Kamerasystem (100, 200, 300, 400) so ausgestaltet ist, dass die Blickrichtungen (10, 20, 30, 40) der Kamerasysteme (100, 200, 300, 400) von zwei einander gegenüber gelegenen Überwachungsplattformen (1, 2, 3, 4) einander zugewandt sind, und wobei die Überwachungsplattform (1, 2, 3, 4) jeweils von einem Luftfahrzeug gebildet oder an Bord eines Luftfahrzeugs vorgesehen ist;
**dadurch gegennzeichnet,**
dass eine Schwenkvorrichtung vorgesehen ist, mit der das Kamerasystem (100, 200, 300, 400) zwischen einer Überwachungsposition und einer Navigationsposition verschwenkbar ausgebildet ist, und
dass die Überwachungsplattform (1, 2, 3, 4) ausgebildet ist, um zur Bestimmung der eigenen Position Sternpeilungen mit einer in die Navigationsposition geschwenkten Kamera des Kamerasystems (100, 200, 300, 400) durchzuführen.

2. Luftraumüberwachungssystem nach Anspruch 1,
**dadurch gekennzeichnet,**
**dass** drei oder mehr Überwachungsplattformen (1, 2, 3, 4) an voneinander beabstandeten Positionen außerhalb oder am Rand des zu überwachenden Gebiets (G) vorgesehen sind.

3. Luftraumüberwachungssystem nach Anspruch 1 oder 2,
**dadurch gekennzeichnet,**
**dass** zumindest zwei Paar der Überwachungsplattformen (1, 2; 3, 4) vorgesehen sind, wobei das zu überwachende Gebiet (G) oder ein Teil des zu überwachenden Gebiets zwischen den Überwachungsplattformen (1, 2; 3, 4) eines jeden Paares gelegen ist.

4. Luftraumüberwachungssystem nach einem der vorhergehenden Ansprüche,
**dadurch gekennzeichnet,**
**dass** jedes der Kamerasysteme zur Erfassung und Bahnverfolgung von in großer Entfernung befindlichen bewegten Objekten ausgebildet ist und zu diesem Zweck ausgestaltet ist mit
- einer mit einer Kameraoptik (102) versehenen Kamera (101) und
- einer Lagestabilisierungsvorrichtung (130) für die Kamera (101) und die Kameraoptik (102),
- wobei die Kamera (101) versehen ist mit
· einem ersten Bildsensor (110) mit einem diesem zugeordneten ersten Hochgeschwindigkeitsverschluss (111);
· einem zweiten Bildsensor (112) mit einem diesem zugeordneten zweiten Hochgeschwindigkeitsverschluss (113);
- wobei die Kameraoptik (102) eine Einrichtung (120) aus optischen Elementen zur Bündelung einfallender Strahlung auf einer strahlungsempfindlichen Oberfläche des ersten Bildsensors (110) und/oder des zweiten Bildsensors (112) mit zumindest einer Spiegelteleskopanordnung (122) und zumindest einer Zielverfolgungsspiegelanordnung (124) aufweist und versehen ist mit
· einer Antriebseinrichtung (244) für zumindest ein bewegbares Element der Zielverfolgungsspiegelanordnung (124) und
· einer Steuerungseinrichtung (246) für die Antriebseinrichtung (244) und
· wobei die Einrichtung (120) aus optischen Elementen eine dem ersten Bildsensor (110) zugeordnete erste Unteranordnung (126) aus optischen Elementen mit einer ersten Brennweite (f1) und eine dem zweiten Bildsensor (112) zugeordnete zweite Unteranordnung (128) aus optischen Elementen mit einer zweiten Brennweite (f2) aufweist, die kürzer ist, als die erste Brennweite (f1).

5. Luftraumüberwachungssystem nach einem der vorhergehenden Ansprüche,
**dadurch gekennzeichnet,**
**dass** der optische Strahlengang des Kamerasystems (100) zwischen der ersten Unteranordnung (126) und der zweiten Unteranordnung (128) umschaltbar ist, wobei zur Umschaltung vorzugsweise ein bewegbarer, insbesondere schwenkbarer, Spiegel (129) vorgesehen ist.

6. Luftraumüberwachungssystem nach einem der vorhergehenden Ansprüche,
**dadurch gekennzeichnet,**
**dass** der jeweilige Bildsensor (110, 112) des Kamerasystems ein Empfindlichkeitsmaximum im Spektralbereich zwischen 0,7 µm und 1,7 µm Wellenlänge aufweist.

7. Luftraumüberwachungssystem nach einem der vorhergehenden Ansprüche,
**dadurch gekennzeichnet,**
**dass** die Kamera (101) des Kamerasystems (100) eine aus mehreren Spektralfiltern (121A, 121 B, 121C) bestehende Filteranordnung (121) aufweist, die jeweils bei Bedarf in den Strahlengang einkoppelbar sind, wobei die Filteranordnung (121) vorzugsweise als Filterrad ausgebildet ist.

8. Luftraumüberwachungssystem nach einem der vorhergehenden Ansprüche,
**dadurch gekennzeichnet,**
**dass** im Kamerasystem (100) weiterhin eine Zielbeleuchtungsvorrichtung (104) mit einer Strahlungsquelle (140), vorzugsweise einer, bevorzugt als Laserarray oder einer Xenon-Kurzlichtbogenlampe mit asphärischer Kollimationsoptik und Pinholekollimator als Strahlungsquelle ausgebildeten, Laser-Strahlungsquelle, vorgesehen ist, wobei die Zielbeleuchtungsvorrichtung (104) vorzugsweise mit der Kameraoptik (102) derart koppelbar ist, dass die von der Zielbeleuchtungsvorrichtung abgegebene Zielbeleuchtungsstrahlung in den Strahlengang der Kameraoptik (102) zur Bündelung der abgegebenen Strahlung einkoppelbar ist und wobei die Kameraoptik (102) weiter vorzugsweise zur Einkoppelung der Zielbeleuchtungsstrahlung eine Spiegelanordnung (123) aufweist, die so ausgestaltet ist, dass der Strahlengang der Kameraoptik (102) zwischen dem ersten Bildsensor (110) und der Zielbeleuchtungsvorrichtung (104) umschaltbar ist.

9. Luftraumüberwachungssystem nach einem der vorhergehenden Ansprüche,
**dadurch gekennzeichnet,**
**dass** das Kamerasystem (100) weiterhin mit einer automatisch arbeitenden Bildauswerteeinrichtung (105) versehen oder verbunden ist, an die die Bilddaten der von der Kamera (102) aufgenommenen Bilder übertragen werden.

10. Luftraumüberwachungssystem nach einem der vorhergehenden Ansprüche,
**dadurch gekennzeichnet,**
**dass** das jeweilige Luftfahrzeug ein Höhenluftfahrzeug ist und im Bereich der Stratosphäre, vorzugsweise in etwa 38 km Höhe, positioniert ist.

11. Luftraumüberwachungssystem nach einem der vorhergehenden Ansprüche,
**dadurch gekennzeichnet,**
**dass** das Kamerasystem (100, 200, 300, 400) mittels der Schwenkvorrichtung zwischen der Überwachungsposition und einer Kommunikationsposition verschwenkbar ausgebildet ist.

12. Luftraumüberwachungssystem nach einem der Ansprüche 8 bis 11,
**dadurch gekennzeichnet,**
**dass** die Strahlungsquelle (140) der Zielbeleuchtungsvorrichtung (104) mittels einer Dateneinkopplungsvorrichtung modulierbar ausgebildet ist, um in der Kommunikationsposition mit der ausgesandten modulierten Strahlung Daten übertragen zu können.

13. Verfahren zur Luftraumüberwachung mit einem Luftraumüberwachungssystem gemäß einem der vorhergehenden Ansprüche,
**dadurch gekennzeichnet,**
- **dass** mittels zumindest eines Kamerasystems (100) einer jeden Überwachungsplattform (1, 2, 3, 4) der Luftraum oder ein Bereich des Luftraums über dem zu überwachenden Gebiet (G) in einer Scan-Prozedur, bei der das Kamerasystem (100) in einem Scan-Modus arbeitet, systematisch nach Objekten abgesucht wird, die im Verhältnis zu ihrer Umgebung eine signifikant höhere Wärmestrahlung abgeben, wobei das Kamerasystem (100) nach dem Erfassen eines derartigen eine hohe Wärmestrahlung aussendenden Objekts vom Scan-Modus in einem Zielverfolgungsmodus einer Zielverfolgungs-Prozedur umgeschaltet wird, bei dem mittels einer größeren Brennweite ein das erfasste Objekt (T) enthaltender kleinerer Bildausschnitt von der Kamera aufgenommen wird und die Kamera mit diesem sich bewegenden erfassten Objekt (T) mitgeführt wird,
- **dass** das Kamerasystem (100, 200, 300, 400) zum Zweck der Positionsbestimmung aus der Überwachungsposition in eine Navigationsposition verschwenkt wird und
- **dass** die jeweilige Überwachungsplattform (1, 2, 3, 4) zur Bestimmung der eigenen Position Sternpeilungen mit der Kamera ihres in die Navigationsposition verschwenkten Kamerasystems (100, 200, 300, 400) durchführt.

14. Verfahren zur Luftraumüberwachung nach Anspruch 13,
**dadurch gekennzeichnet,**
**dass** nach dem Umschalten des Kamerasystems (100) in den Zielverfolgungsmodus mittels eines Bildauswerteverfahrens eine Objekterkennung für das erfasste Objekt (T) durchgeführt wird, um das Objekt anhand von in einer Datenbank gespeicherten Bilddaten zu identifizieren.

15. Verfahren zur Luftraumüberwachung nach Anspruch 13 oder 14,
**dadurch gekennzeichnet,**
**dass** im Zielverfolgungsmodus des Kamerasystems (100) eine Zielbeleuchtungsvorrichtung (104) aktiviert wird, wenn das vom erfassten Objekt (T) ausgesandte Wärmestrahlungssignal ausbleibt oder unter einen vorgegebenen Schwellenwert absinkt, so dass die Zielbeleuchtungsvorrichtung (104) das Objekt (T) beleuchtet.

16. Verfahren zur Luftraumüberwachung nach einem der Ansprüche 13 bis 15,
**dadurch gekennzeichnet,**
**dass** die Blickrichtung des Kamerasystems (100, 200, 300, 400) einer jeden Überwachungsplattform (1, 2, 3, 4) vom Standort der zugehörigen Überwachungsplattform (1, 2, 3, 4) durch den überwachten Bereich (V) des Luftraums des zu überwachenden Gebiets in Richtung Weltraum gerichtet ist.

17. Verfahren zur Luftraumüberwachung nach einem der Ansprüche 13 bis 16,
**dadurch gekennzeichnet,**
**dass** nach dem Erfassen eines Objekts (T) durch ein Kamerasystem (100, 200, 300, 400) einer Überwachungsplattform (1, 2, 3, 4) Information über die Blickrichtung und damit über den Sektor des überwachten Luftraums, in welchem das Objekt erfasst wurde, vom erfassenden Kamerasystem an zumindest ein Kamerasystem, vorzugsweise zwei Kamerasysteme, von zumindest einer beziehungsweise zwei weiteren Überwachungsplattformen übermittelt wird; dass diese weitere(n) Überwachungsplattform(en) (1, 2, 3, 4) ihre Scanaktivität auf diesen Sektor des Luftraums richten und dass dann, wenn zumindest ein weiteres Kamerasystem das Objekt (T) erfasst hat, von den Kamerasystemen, die das Objekt (T) erfasst haben, zeitsynchrone Peilungen auf das Objekt durchgeführt werden, um die jeweils aktuelle Position und die Bewegungsbahn des erfassten Objekts (T) zu bestimmen.
